# EUROPÄISCHE PATENTANMELDUNG

(11) **EP 0 878 417 A1**
(43) Veröffentlichungstag der Anmeldung: **18.11.1998**
(21) Anmeldenummer: 98107683.9
(22) Anmeldetag: 28.04.1998
(51) Int. Cl.: B65G 1/14

(54) **Stapelsäule**

(30) Priorität: 09.05.1997 DE 29708323 U
(71) Anmelder: MTS Maschinenbau GmbH, 88512 Mengen (DE)
(72) Erfinder: Schoeller, Heinz, 78239 Rielasingen/Worblingen (DE); Strobel, Gustav, 88348 Saulgau (DE)
(74) Vertreter: Weiss, Peter, Dr. rer. nat.

(57) **Zusammenfassung**

Bei einer Stapelsäule zum Einlegen von Lagergütern (3.1 - 3.3) in gegenseitigen Abständen auf bzw. an Klinkenhebeln (2.1 -2.5), welche schwenkbar gelagert sind, ist zumindest einem Teil der Klinkenhebel (2.1 - 2.5) ein Sperrelement (4 - 4.2) zugeordnet, welches eine Schwenkbewegung von diesem Teil der Klinkelhebel (2.1 - 2.5) unterbindet und/oder die jeweiligen Lagergüter (3.1 - 3.3) auf bzw. an diesen Klinkelhebeln (2.1 - 2.3) festlegt.

## Beschreibung

Die Erfindung betrifft eine Stapelsäule zum Einlegen von Lagergütern in gegenseitigen Abständen auf bzw. an Klinkenhebeln, welche schwenkbar gelagert sind.

Derartige Stapelsäulen sind in vielfältiger Form und Ausführung bekannt. Eine vertikale Stapelsäule ist bspw. in der DE 38 11 310 A1 gezeigt. Eine horizontal angeordnete Stapelsäule ist aus der DE 40 20 864 A1 zu entnehmen. Die DE 41 33 464 A1 zeigt eine schräge Stapelsäule. Für die Ausgestaltung der Klinkenhebel und ihrer voneinander abhängigen Bewegungen gibt es eine Vielzahl von Ausführungsbeispiele, auf deren Beschreibung bei der vorliegenden Erfindung verzichtet werden soll. Bei allen diesen Ausführungsbeispielen kann die vorliegende Erfindung Anwendung finden.

Normalerweise werden Stapelsäulen mit einem Lagergut, bspw. einem Karosserieteil eines Automobils beladen, wobei dieses Lagergut in der Regel zwischengelagert wird. Da die Klinkenhebelbewegung in der Regel voneinander abhängig ist, genügte es in der Vergangenheit meist, wenn der oberste Klinkenhebel verriegelt wurde. In diesem Fall waren auch die anderen Klinkenhebel verriegelt. Diese Möglichkeit entfällt jedoch, wenn die Stapelsäule nur zum Teil beladen wird.

Ferner entstehen Probleme insbesondere beim Transport der Stapelsäule mit dem Lagergut. Hier kommt es in vielen Fällen zu einem Verrutschen oder Springen des Lagergutes, so dass eine anschliessende Entnahme mittels eines Roboters wesentlich erschwert ist. Ferner beschädigt sich das Lagergut selbst.

Der vorliegenden Erfindung liegt die Aufgabe zugrunde, diese Nachteile zu beseitigen und ein Weg- bzw. Verrutschen der Lagergüter möglichst zu verhindern.

Zur Lösung dieser Aufgabe führt, dass zumindest einem Teil der Klinkenhebel ein Sperrelement zugeordnet ist, welches eine Schwenkbewegung von diesem Teil der Klinkenhebel unterbindet und/oder die jeweiligen Lagergüter auf bzw. an diesen Klinkenhebeln festlegt.

In einem einfachen Ausführungsbeispiel kann es genügen, wenn lediglich die Klinkenhebel in einer Lage festgelegt werden. Hierzu dient bspw. ein Sperrschieber, der so ausgestaltet ist, dass er einen Teil oder alle Klinkenhebel bspw. in der Arbeitslage festlegt. Der Sperrschieber drückt dabei auf einen Anschlagzapfen od. dgl. an dem Klinkenhebel, während der Klinkenhebel selbst an einem Widerlager anschlägt. Auf diese Weise wird der Klinkenhebel zwischen dem Anschlagszapfen und dem Widerlager verspannt.

Bevorzugt wird der Sperrschieber an den Schwenkachsen der Klinkenhebel angeordnet, wobei die Schwenkachsen jeweils ein Langloch in dem Sperrschieber durchgreifen können. Hierdurch ist gleichzeitig die Führung des Sperrschiebers definiert, so dass eine genaue Zuordnung der Anschlagzapfen zu dem Sperrschieber erfolgt.

Damit der Sperrschieber mit den Anschlagzapfen zusammenwirken kann, sind randseitg Ausnehmungen eingeformt, in deren Bereich sich die Anschlagzapfen bewegen. Zum Sperren drückt eine Randkante der Ausnehmung auf den jeweiligen Anschlagzapfen.

In einem weiteren einfachen Ausführungsbeispiel sollen den Klinkenhebeln Riegelstreifen zugeordnet sein, welche nach dem Beladen der Klinkenhebel in den Ladebereich einschwenkbar sind und damit das Lagergut übergreifen. Hierdurch wird zwar, im Gegensatz zum ersten Ausführungsbeispiel, der Bewegungsbereich des Lagergutes begrenzt, allerdings wird das Lagergut nicht festgelegt. Deshalb ist in einem besonders bevorzugten Ausführungsbeispiel vorgesehen, dass ein Sperrlineal mit Drucknasen zum Lagergut hin führbar angeordnet ist. D.h., in Endlage des Sperrlineals wird das Lagergut auf den Klinkenhebel gedrückt und so festgelegt. Es versteht sich von selbst, dass Klinkenhebel und Drucknasen bei sogfältig zu behandelnden Lagergütern entsprechend geschützt sind. Dieses Ausführungsbeispiel bietet sich vor allem bei horizontalen Stapelsäulen an, bei denen dann mittels der Drucknasen die Lagergüter zu den Klinkenhebeln hin verschoben werden. Selbstverständlich ist ein derartiges Sperrlineal auch bei vertikalen und schrägen Stapelsäulen anwendbar, wobei der besondere Vorteil hervorzuheben ist, dass das Lagergut während seiner gesamten Lagerzeit, gleichgültig ob die Stapelsäulen transportiert werden oder nicht, eine Lage beibehält, so dass ein Zugriff von einem Entnahmeroboter wesentlich erleichtert und verbessert ist.

Damit das Sperrlineal auf das Lagergut drücken kann, sollte es schräg führbar angeordnet sein. In einem einfachen Ausführungsbeispiel weist es deshalb schräge Langlöcher auf, in denen Führungselemente sitzen. Dies können extra hierfür vorgesehene Führungszapfen in der Stapelsäule sein, der Einfachheit halber werden aber die Schwenkachsen der Klinkenhebel verwendet.

Das Sperrlineal soll in einer Gebrauchslage verriegelbar sein. Hierzu bieten sich eine Vielzahl von Möglichkeiten an. Es können einfach Verriegelungelemente sein, wie bspw. Durchsteckbolzen, gedacht ist aber auch an roboterbetätigbare Verriegelungen, wie bspw. Federhebel welche entsprechende Drehhebel sperren. In jedem Fall sollte zusätzlich eine Rückholfeder vorgesehen sein, die das Sperrlineal in seine Ruhelage zurückholt. In dieser Ruhelage befinden sich die Drucknasen innerhalb der Stapelsäule und behindern so kein Entladen der Stapelsäule. Das gleiche gilt sebstverständlich auch für das Beladen, während dem sich das Sperrlineal in der Ruhelage befindet. Die Drucknasen fahren erst dann aus der Stapelsäule aus, wenn die Lagergüter festgelegt werden soll.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht einer erfindungsgemässen Stapelsäule mit einem Ausführungsbeispiel eines Sperrelementes;
Figur 2 eine Draufsicht auf einen Teil einer geöffneten Stapelsäule mit einem weiteren Ausführungsbeispiel eines Sperrelementes;
Figur 3 Seitenansichten von zwei sich gegenüberstehenden Stapelsäulen, in denen ein weiteres Ausführungsbeispiel eines Sperrelementes integriert ist;
Figur 4 eine Draufsicht auf einen Teil einer geöffneten Stapelsäule mit einem Sperrelement gemäss Figur 3.

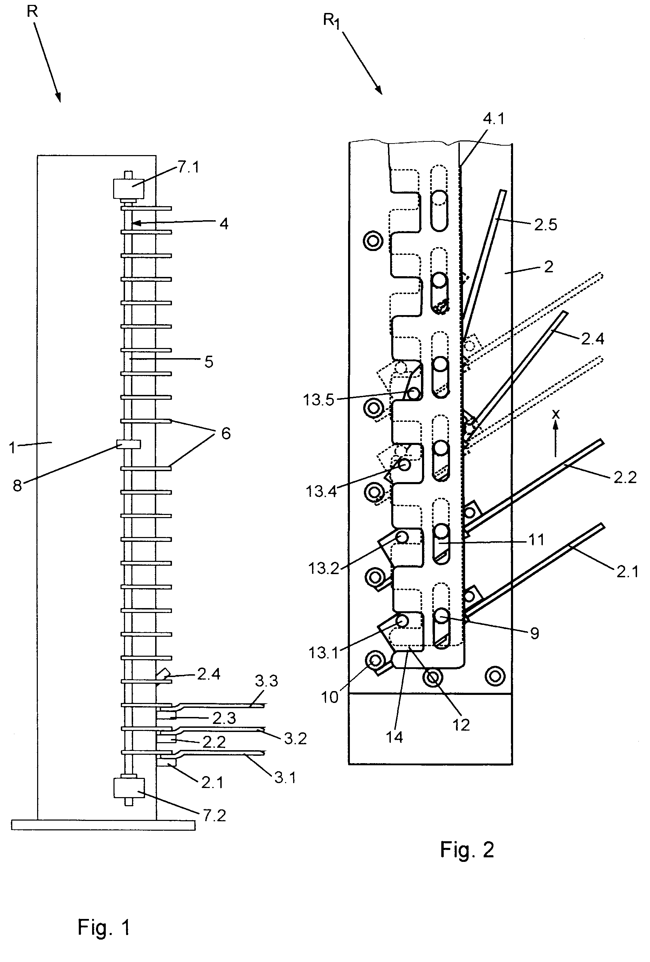

Gemäss Figur 1 weist eine Stapelsäule R zwei Seitenwände auf, von denen nur die vordere Seitenwand 1 gezeigt ist. In bspw. aus der DE 38 11 310 A1 bekannten Art und Weise sind zwischen den beiden Seitenwänden Klinkenhebel angeordnet, die bevorzugt von einer Ruhelage in eine Bereitschaftstellung und von dieser Bereitschaftstellung in eine Arbeitsstellung schwenkbar sind. Im vorliegenden Fall sind drei Klinkenhebel 2.1, 2.2 und 2.3 in Arbeitsstellung angedeutet, während sich der Klinkenhebel 2.4 in Bereitschaftstellung befindet. Jeder Klinkenhebei 2.1 bis 2.4 dient als Auflager für ein Lagergut 3.1 bis 3.3, welches die unterschiedlichsten Formen haben kann. In vielen Fällen sind dementsprechend auch die Klinkenhebel 2.1 bis 2.4 angepasst.

Im vorliegenden Ausführungsbeispiel ist der Stapelsäule R ein Sperrelement 4 zugeordnet, welches eine drehbare Welle 5 aufweist, an der Riegelstreifen 6 festliegen. Die Welle 5 dreht in Lagerwinkeln 7.1 und 7.2, wobei im vorliegenden Ausführungsbeispiel noch ein Zwischenlager 8 vorgesehen ist.

Die Funktionsweise dieses ersten Ausführungsbeispiels ist folgende:

Beim Beladen der Stapelsäule befinden sich die Riegelstreifen 6 ausserhalb des Beladungsbereiches, d.h., sie sind mittels der Welle 5 um etwa 90° aus dem Beladungsbereich herausgeschwenkt. Nunmehr werden die Stapelsäulen R beladen, d.h., das Lagergut 3.1 bis 3.3 wird auf die Kiinkenhebel 2.1 bis 2.3 aufgelegt.

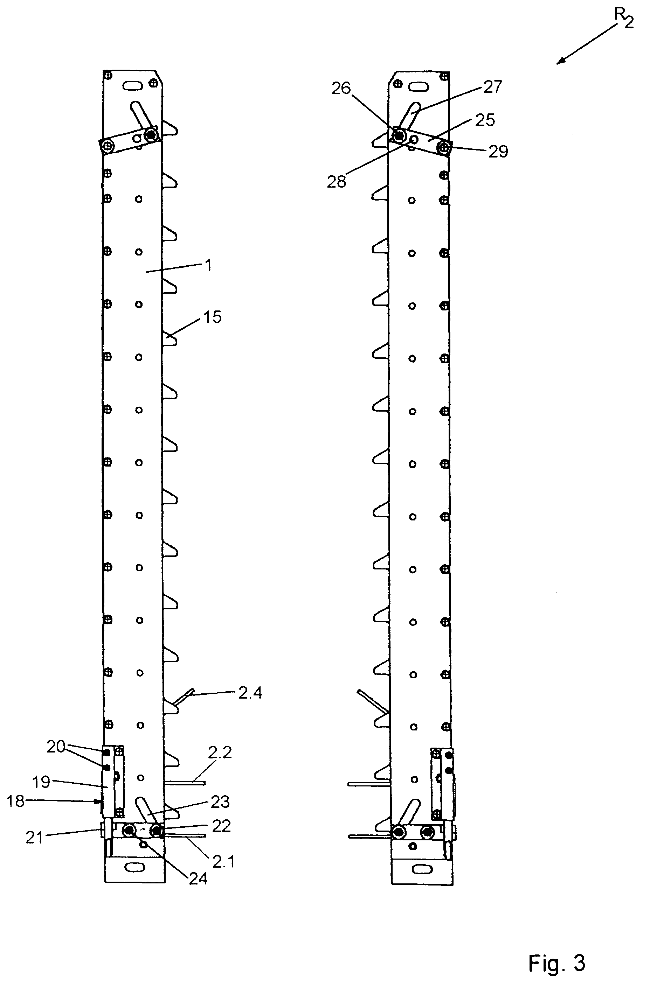

Sobald der Beladungsvorgang beendet ist, was bspw. auch schon nach der Beladung von drei Klinkenhebeln der Fall sein kann, wird die Welle 5 um etwa 90° gedreht, so dass die Riegelstreifen 6 in die in Figur 1 gezeigte Arbeitslage gelangen und dabei die Lagergüter 3.1 bis 3.3 übergreifen. Die Lagergüter 3.1 und 3.3 werden auf diese Weise zwischen den Klinkenhebeln 2.1 bis 2.3 und den entsprechenden Riegelstreifen 6 festgelegt. Allerdings kann dies nur mit einem gewissen Spiel geschehen, weshalb später zu den Figuren 3 bis 4 noch eine verbesserte Ausführungsform beschrieben wird.

Eine Stapelsäule R1 gemäss Figur 2 weist ein anderes Sperrelement 4.1 auf. Dieses wird auch als Sperrschieber bezeichnet und dient nur dazu, die Klinkenhebel in einer ausgeschwenkten Arbeitsstellung festzulegen. Dies geschieht unabhänig davon, ob alle Klinkenhebel beladen sind oder nicht.

Die Klinkenhebel 2.1 bis 2.5 drehen um Schwenkachse 9, welche ortsfest zwischen den beiden Seitenwänden der Stapelsäule R1 befestigt sind, wobei im vorliegenden Fall nur die Seitenwand 2 gezeigt ist. In Arbeitsstellung schlägt jede Klinke 2.1 bis 2.5 an einem Widerlager 10 an, so dass der Schwenkbereich des Klinkenhebels 2.1 bis 2.5 begrenzt ist.

Der Sperrschieber 4.1 lagert verschiebbar an den Schwenkachsen 9, wobei diese Schwenkachsen 9 entsprechende Langlöcher 11 in dem Sperrschieber 4.1 durchsetzen. Ferner sind in dem Sperrschieber 4.1 randseitig Ausnehmung 12 eingeformt, in deren Bereich sich ein Anschlagzapfen 13.1 bis 13.5 bewegt, welcher dem jeweiligen Klinkenhebel 2.1 bis 2.5 zugeordnet ist. Erkennbar ist, dass sich die Anschlagzapfen 13.1 und 13.2 derjenigen Klinken, die sich bereits in Arbeitsstellung befinden, links oben in der jeweiligen Ausnehmung 12 befinden, der Anschlagzapfen 13.4 des Klinkenhebels 2.4, der sich in Bereitschaftstellung befindet, etwa in der Mitte der Ausnehmung und der Anschlagzapfen 13.5 desjenigen Klinkenhebels 2.5, der sich in Ruhestellung befindet, rechts unten in der Ausnehmung angeordnet ist.

Die Funktionsweise dieses erfindungsgemässen Sperrschiebers 4.1 ist folgende:

Während dem Beladen mit entsprechenden Lagergütern können sich die Klinkenhebel 2.1 bis 2.5 trotz des Sperrschiebers 4.1 völlig frei bewegen. Sobald die gewünschte Anzahl der Klinkenhebel beladen ist, sollen sie mittels des Sperrelementes gesperrt werden. Dies geschieht dadurch, dass das Sperrelement in Richtung x verschoben wird und zwar in die gestrichelt angedeutete Stellung. Dabei drückt eine untere Randkante 14 der jeweiligen Ausnehmung 12 auf jeden Anschlagzapfen 13.1 bis 13.5, der sich im Bereich der Ausnehmung 12 bewegt und legt diesen fest bzw. nimmt diesen und damit auch den zugeordneten Klinkenhebel mit. In Endlage schlägt der Klinkenhebel mit seinem hinteren Ende am Widerlager 10 an, während die Randkante 14 auf den jeweiligen Anschlagzapfen 13 drückt. In dieser Stellung kann das Sperrelement verriegelt werden, indem bspw. ein Stift durch die Seitenwand 2 gesteckt wird, der in eine entsprechende Bohrung in dem Sperrschieber 4.1 einfährt.

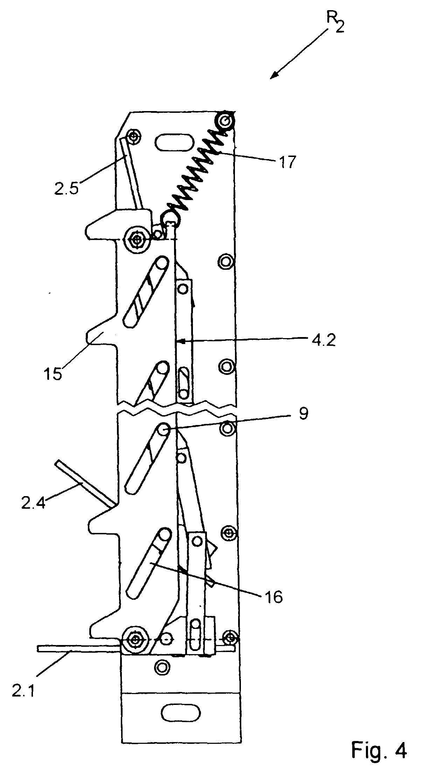

In dem Ausführungsbeispiel einer Stapelsäule R2 gemäss den Figuren 3 und 4 ist als Sperrelement ein Sperrlineal 4.2 vorgesehen, wie dies insbesondere in Figur 4 erkennbar ist. Dieses Sperrlineal 4.2 besitzt randseitig Drucknasen 15, die in Gebrauchslage auf einem Lagergut aufsitzen oder diesem anliegen, je nach dem, ob die Stapelsäule stehend oder liegend ausgestaltet ist. Ferner besitzt das Sperrlineal 4.2 schräge Langlöcher 16, welche im vorliegenden Ausführungsbeispiel von den Schwenkachsen 9 der Klinkenhebel 2.1 bis 2.5 durchgriffen sind.

Ferner ist dem Sperrlineal 4.2 eine Rückholfeder 17 und eine Verriegelung 18 zugeordnet. Diese Verriegelung 18 besteht im vorliegenden Ausführungsbeispiel aus einem Federhebel 19, der einends auf der Seitenwand 1 festliegt. Hierzu sind entsprechende Befestigungselemente 20 angedeutet. Andernends weist der Federhebel 19 eine nicht näher gezeigte Mulde auf, in die ein Drehhebel 21 einrasten kann, der wiederum über einen Drehbolzen 22 durch ein schräges Langloch 23 in der Seitenwand 1 hindurch mit dem Sperrlineal 4.1 verbunden ist. Der Drehhebel 21 dreht dabei um eine Drehpunkt 24.

Die Funktionsweise dieses erfindungsgemässen Sperrlineals 4.2 ist folgende:

Wiederum werden die entsprechenden Klinkenhebel 2.1 bis 2.5 mit Lagergüter beladen. Ist der Beladungsvorgang beendet, so wird das Sperrlineal 4.2, welches sich bislang mit seinen Drucknasen 15 innerhalb der Seitenwände 1 und 2 befindet, ausgeschwenkt. Dies geschieht mittels eines weiteren Drehhebels 25, der einends über einen Gelenkbolzen 26 durch ein schräges Langloch 27 hindurch mit dem Sperrlineal 4.2 verbunden ist und nach einer Drehachse 28 andernends einen Hebelknauf 29 aufweist.

Das Sperrlineal 4.2 wird soweit aus der Stapelsäule R2 herausgefahren, bis die Drucknasen 15 auf die Lagergüter aufdrücken und diese zwischen sich und den Klinkenhebeln einklemmen. In Figur 3 ist angedeutet, dass die Lagergüter unterschiedliche Dicken aufweisen können, wobei die Drucknasen auch einen unterschiedlichen Abstand von den entsprechenden Klinkenhebeln einnehmen können.

In Endlage rastet der Drehhebel 21 in der nicht gezeigten Rastmulde des Federhebels 19 ein, so dass hierdurch das Sperrlineal verriegelt ist.

Soll das Sperrlineal gelöst werden, genügt es, wenn bspw. ein Entnahmeroboter den Federhebel 19 von der Seitenwand 1 abhebt, so dass der Drehhebel 21 freigegeben wird. Das Sperrlineal 4.2 wird dann von der Feder 17 in seine Ruhelage rückgeholt.

| **Positionszahlenliste** | | | | | |
|---|---|---|---|---|---|
| 1 | Seitenwand | 34 | | 67 | |
| 2 | Klinkenhebel | 35 | | 68 | |
| 3 | Lagergut | 36 | | 69 | |
| 4 | Sperrelement | 37 | | 70 | |
| 5 | Welle | 38 | | 71 | |
| 6 | Riegelstreifen | 39 | | 72 | |
| 7 | Lagerwinkel | 40 | | 73 | |
| 8 | Zwischenlager | 41 | | 74 | |
| 9 | Schwenkachse | 42 | | 75 | |
| 10 | Widerlager | 43 | | 76 | |
| 11 | Langloch | 44 | | 77 | |
| 12 | Ausnehmung | 45 | | 78 | |
| 13 | Anschlagzapfen | 46 | | 79 | |
| 14 | Randkante | 47 | | | |
| 15 | Drucknase | 48 | | | |
| 16 | Langlöcher | 49 | | | |
| 17 | Rückholfeder | 50 | | | |
| 18 | Verriegelung | 51 | | | |
| 19 | Federhebei | 52 | | R | Stapelsäule |
| 20 | Befestigungselement | 53 | | x | Verschieberichtung |
| 21 | Drehhebel | 54 | | | |
| 22 | Drehbolzen | 55 | | | |
| 23 | Langloch | 56 | | | |
| 24 | Drehpunkt | 57 | | | |
| 25 | Drehhebel | 58 | | | |
| 26 | Gelenkbolzen | 59 | | | |
| 27 | Langloch | 60 | | | |
| 28 | Drehachse | 61 | | | |
| 29 | Hebelknauf | 62 | | | |
| 30 | | 63 | | | |
| 31 | | 64 | | | |
| 32 | | 65 | | | |
| 33 | | 66 | | | |

## Patentansprüche

1. Stapelsäule zum Einlegen von Lagergütern (3.1 - 3.3) in gegenseitigen Abständen auf bzw. an Klinkenhebein (2.1 - 2.5), welche schwenkbar gelagert sind,
dadurch gekennzeichnet,
dass zumindest einem Teil der Klinkenhebel (2.1 - 2.5) ein Sperrelement (4 - 4.2) zugeordnet ist, welches eine Schwenkbewegung von diesem Teil der Klinkelhebel (2.1 - 2.5) unterbindet und/oder die jeweiligen Lagergüter (3.1 - 3.3) auf bzw. an diesen Klinkelhebeln (2.1 - 2.3) festlegt.

2. Stapelsäule nach Anspruch 1, dadurch gekennzeichnet, dass den Klinkenhebeln (2.1 - 2.5) ein Sperrschieber (4.1) zugeordnet ist, der auf einen Anschlagzapfen (13.1 - 13.5) od. dgl. drückt, wenn gleichzeitig ein Teil des Klinkenhebels (2.1 - 2.5) an einem Widerlager (10) anschlägt und sich der Klinkenhebei (2.1 - 2.5) in Arbeitsstellung befindet.

3. Stapelsäule nach Anspruch 2, dadurch gekennzeichnet, dass der Sperrschieber (4.1) an Schwenkachsen (9) der Klinkenhebel (2.1 - 2.5) angeordnet ist, wobei die Achse (9) jeweils ein Langloch (11) durchsetzt, so dass der Sperrschieber (4.1) längsverschieblich ist.

4. Stapelsäule nach Anspruch 3, dadurch gekennzeichnet, dass dem Sperrschieber (4.1) randseitig Ausnehmungen (12) eingeformt sind, in deren Bereich sich die Anschlagzapfen (13.1 - 13.5) bewegen.

5. Stapelsäule nach wenigstens einem der Ansprüche 1 bis 4, dadurch gekennzeichnet, dass den Klinkenhebeln (2.1 - 2.4) Riegelstreifen (6) zugeordnet sind, welche andererseits der Klinkenhebel (2.1 - 2.4) das Lagergut (3.1 - 3.3) übegreifen.

6. Stapelsäule nach Anspruch 5, dadurch gekennzeichnet, dass die Riegelstreifen (6) an einer drehbaren Welle (5) angeordnet sind.

7. Stapelsäule nach Anspruch 6, dadurch gekennzeichnet, dass die Welle (5) in Lagerwinkel (7.1, 7.2) an einer Seitenwand (1) einer Stapelsäule (12) dreht.

8. Stapelsäule nach wenigstens einem der Ansprüche 1 bis 4, dadurch gekennzeichnet, dass Drucknasen (15) an einem Sperrlineal (4.2), führbar zu dem Lagergut auf den Klinkenhebeln (2.1 - 2.4) hin, angeordnet sind.

9. Stapelsäule nach Anspruch 8, dadurch gekennzeichnet, dass das Sperrlineal (4.2) schräg führbar angeordnet ist.

10. Stapelsäule nach Anspruch 9, dadurch gekennzeichnet, dass das Sperrlineal (4.2) schräge Langlöcher (16) aufweist, in denen Führungselemente sitzen.

11. Stapelsäule nach Anspruch 10, dadurch gekennzeichnet, dass als Führungselemente die Schwenkachsen (9) der Klinkenhebel (2.1 - 2.4) vorgesehen sind.

12. Stapelsäule nach wenigstens einem der Ansprüche 8 bis 11, dadurch gekennzeichnet, dass dem Sperrlineal (4.2) eine Rückholfeder (17) zugeordnet ist.

13. Stapelsäule nach wenigstens einem der Ansprüche 8 bis 12, dadurch gekennzeichnet, dass dem Sperrlineal (4.2) eine Verriegelung (18) in einer Gebrauchslage zugeordnet ist.

14. Stapelsäule nach Anspruch 13, dadurch gekennzeichnet, dass die Verriegelung (18) aus einem Federhebel (19) mit einer Rastmulde besteht, in die ein vom Sperrlineal (4.2) betätigter Drehhebei (21) einrastet.
